# EUROPÄISCHE PATENTSCHRIFT

(11) **EP 0 650 973 B1**
(45) Veröffentlichungstag und Bekanntmachung des Hinweises auf die Patenterteilung: **10.03.1999**
(21) Anmeldenummer: 94116511.0
(22) Anmeldetag: 20.10.1994
(51) Int. Cl.: C07F 17/00, C07F 7/08, C07C 22/02, C08F 10/00, C08F 4/602

(54) **Racemische Metallocenkomplexe und Verfahren zu ihrer Herstellung**
Racemic metallocene complexes and method for their preparation
Complexes metallocènes racémiques, et procédé pour leur préparation

(30) Priorität: 30.10.1993 DE 4337232
(43) Veröffentlichungstag der Anmeldung: 03.05.1995
(73) Patentinhaber: BASF Aktiengesellschaft, 67063 Ludwigshafen (DE)
(72) Erfinder: Langhauser, Franz, Dr., D-67098 Bad Dürkheim (DE); Kerth, Jürgen, Dr., D-67316 Carlsberg (DE); Schweier, Günther, Dr., D-67159 Friedelsheim (DE); Brintzinger, Hans-Herbert, Prof. Dr., CH-8274 Taegerswilen (CH); Mansel, Stefan, D-78462 Konstanz (DE)

(56) Entgegenhaltungen:
- EP-A- 0 344 887
- EP-A- 0 544 308

## Beschreibung

Die vorliegende Erfindung betrifft Metallocenkomplexe der allgemeinen Formel I 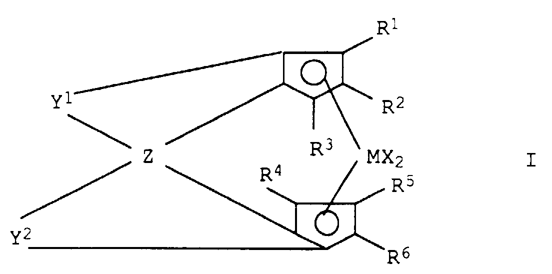 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR⁷,
wobei
- R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁶: Wasserstoff, C1 bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome, bevorzugt 8 bis 15 C-Atome, aufweisende cyclische Gruppen stehen können, oder Si(R⁸)₃ mit
- _{R}8: C₁- bis C₁₀-Alkyl, C₆- bis C₁₅-Aryl oder C₃- bis C₁₀-Cycloalkyl,
- Z: Silicium, Germanium, Zinn oder Kohlenstoff,
- Y¹, Y²: 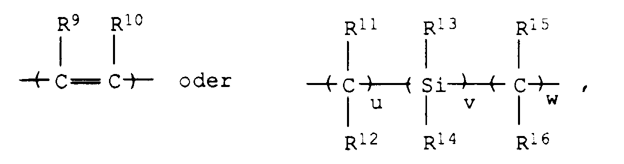
wobei
- R⁹ bis R¹⁶: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁷)₃ bedeuten, mit
- R¹⁷: C₁- bis C₁₀-Alkyl, C₆- bis C₁₅-Aryl oder C₃- bis C₁₀-Cycloalkyl
und
- u, v, w: für ganze Zahlen von 0 bis 7 stehen, mit der Maßgabe, daß die Summe u + v + w ≥ 2 ist.

Weiterhin betrifft die vorliegende Erfindung Cyclopentadienylverbindungen der allgemeinen Formel II 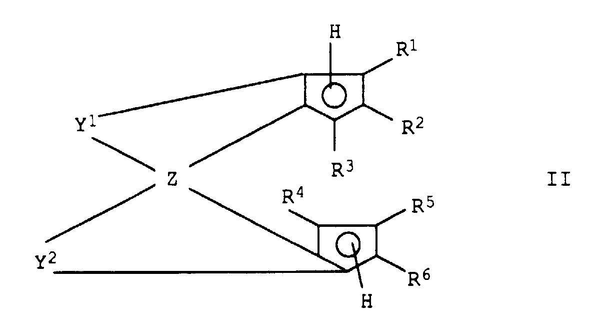 und Cyclopentadienylverbindungen der allgemeinen Formel III 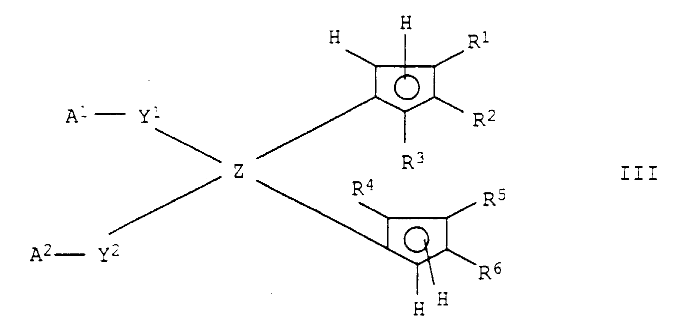 wobei
- A¹, A²: Fluor, Chlor, Brom, Jod oder -OSO₃R¹⁸ mit R¹⁸ C₁- bis C₁₀-Alkyl, C₆- bis C₁₅-Aryl oder C₃- bis C₁₀-Cycloalkyl bedeutet
sowie Verfahren zur Herstellung derartiger Metallocenkomplexe I, Cyclopentadienylverbindungen II und Cyclopentadienylverbindungen III und die Verwendung der Cyclopentadienylverbindungen III zur Herstellung der Cyclopentadienylverbindungen II, die Verwendung der Cyclopentadienylverbindungen II zur Herstellung der Metallcocenkomplexe I sowie die Verwendung der Metallocenkomplexe I als Katalysatoren zur Polymerisation von Olefinen.

Zur stereoselektiven Polymerisation von prochiralen Olefinen mit Metallocen-Katalysatoren ist es notwendig, chirale, stereorigide, d.h. verbrückte Metallocenkomplexe einzusetzen. Bei der Herstellung von iscspezifischen, verbrückten Metallocenkomplexen entstehen Gemische der racemischen und meso-Formen, wie in H. Wiesenfeldt, A. Reinmuth, E. Barsties, K. Evertz, H.-H. Brintzinger, J. Organomet. Chem. 369 (1989), 359 - 370 beschrieben. Insbesondere bei der Polymerisation von Propylen bilden lediglich die racemischen Formen effektive Katalysatpren zur Polymerisation, während die meso-Formen vergleichsweise wenig aktiv sind und niedermolekulares, ataktisches Material liefern, weshalb eine Trennung der racemischen und meso-Fcrmen erforderlich ist. Diese Trennung kann durch fraktionierte Kristallisation bzw. Extraktion erfolgen, wie in der EP-A 344 887 beschrieben, oder durch chromatographische Aufarbeitung, beschrieben in F.R.W.P. Wild, L. Zsolnai, G. Huttner, H.H. Brintzinger, J. Organomet. Chem. 232 (1982), 233 - 247 und R.B. Grossman, W.M. Davis, S.L. Buchwald, J. Am. Chem. Soc. 113 (1991), 2321 - 2322. Die Trennung der einzelnen Isomeren ist jedoch mit erheblichem Aufwand verbunden und für technische Anwendungen daher nicht praktikabel.

Aufgabe der vorliegenden Erfindung war es daher, Metallocenkomplexe zur Verfügung zu stellen, die diese Aufarbeitungsschritte weitestgehend überflüssig machen.

Demgemäß wurden die eingangs definierten Metallocenkomplexe I gefunden.

Außerdem wurden Cyclopentadienylverbindungen II und Cyclopentadienylverbindungen III gefunden sowie Verfahren zur Herstellung derartiger Metallocenkomplexe I, Cyclopentadienylverbindungen II und Cyclopentadienylverbindungen III und die Verwendung der Cyclopentadienylverbindungen III zur Herstellung der Cyclopentadienylverbindungen II, die Verwendung der Cyclopentadienylverbindungen II zur Herstellung der Metallocenkomplexe I sowie die Verwendung der Metallocenkomplexe I als Katalysatoren zur Polymerisation von Olefinen.

Von den erfindungsgemäßen Metallocenkomplexen der allgemeinen Formel I 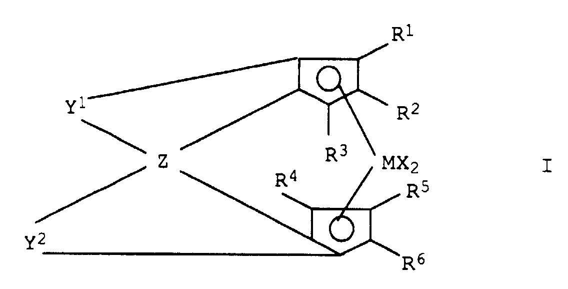 sind diejenigen bevorzugt, in denen die Substituenten folgende Bedeutung haben:
- M: Zirkonium oder Hafnium
- X: Chlor oder C₁- bis C₄-Alkyl
- R¹ bis R⁶: Wasserstoff, C₁ bis C₁₀-Alkyl oder Phenyl
- Z: Silicium oder Kohlenstoff,
- Y¹, Y²: 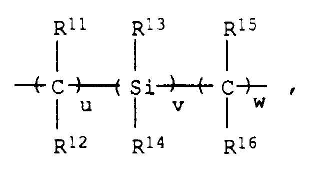
wobei
- R¹¹ bis R¹⁶: Wasserstoff oder C₁- bis C₄-Alkyl bedeuten.

Besonders bevorzugte Metallocenkomplexe I sind diejenigen, bei denen die beiden substituierten Cyclopentadienylsysteme gleich sind und Y¹ und Y² gleich sind, also symmetrische Verbindungen. Besonders bevorzugte Substituenten Y¹ und Y² sind

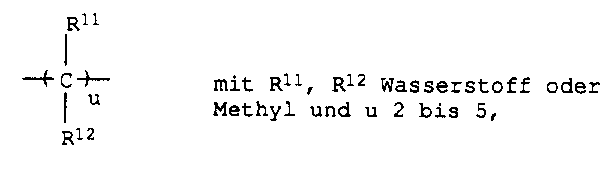

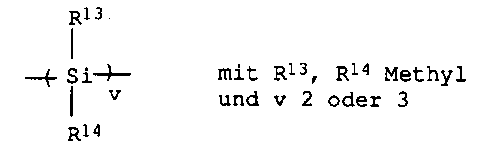

Besonders bevorzugt sind:
Bis(spirosilacyclohexan-[b]-tert-butylcyclopentadienyl)zirkondichlorid,
Bis(spirosilacyclohexan-[b]-methylcyclopentadienyl)zirkondichlorid,
Bis(spirosilacyclohexan-[b]-phenylcyclopentadienyl)zirkondichlorid,
Bis(spirosilacyclohexan-[b]-tert-butylcylopentadienyl)hafniumdichlorid,
Bis(spirosilacyclohexan-[b]-methylcyclopentadienyl)hafnium dichlorid,
Bis(spirosilacyclohexan-[b]-phenylcyclopentadienyl)hafnium dichlorid,
Bis(spirosilacyclohexan-[b]-tert-butylcyclopentadienyl)zirkondimethyl,
Bis(spirosilacyclohexan-[b]-methylcyclopentadienyl)zirkondimethyl und
Bis(spirosilacyclohexan-[b]-phenylcyclopentadienyl)zirkondimethyl.

Die Herstellung der erfindungsgemäßen Metallocenkomplexe I kann so erfolgen, daß die Cyclopentadienylverbindungen II 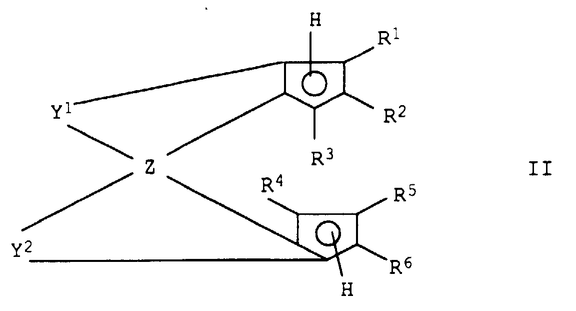 und die Cyclopentadienylverbindungen III 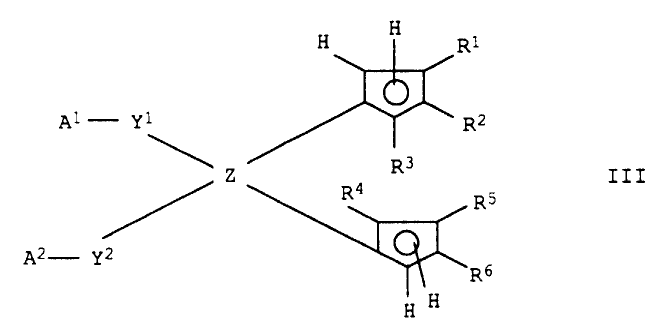 als Zwischenprodukte auftreten. Bei den Cyclopentadienylverbindungen II und den Cyclopentadienylverbindungen III gilt bzgl. den bevorzugten Substituenten das bei den Metallocenkomplexen I Gesagte. Von den Resten A¹ und A² sind Chlor und Brom als bevorzugt zu nennen.

Ein bevorzugtes Verfahren zur Herstellung der Metallocenkomplexe I und somit auch zur Herstellung der Cyclopentadienylverbindungen II und der Cyclopentadienylverbindungen III ist folgendes: 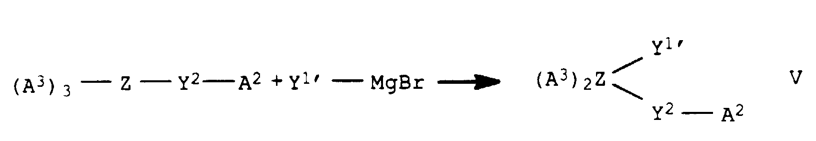 wobei
- A³ für: Fluor, Chlor, Brom oder Jod steht, bevorzugt Chlor
und
- Y^{1'}: Y¹ mit einer endständigen Doppelbindung bedeutet.

Diese Reaktion ist im Prinzip bekannt und beispielsweise in R.E. Scott, K.C. Frisch, J. Am. Chem. Soc. 73 (1951) 2599 - 2600 beschrieben.

Die Umsetzung 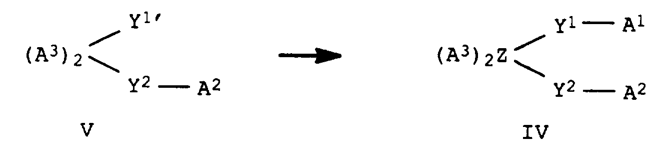 erfolgt bevorzugt durch Addition von H-A¹, insbesondere von H-Br wie prinzipiell in Houben-Weyl Band IV/5a, S. 454 - 456 oder J.E. Francis, L.C. Leitch, Canad. J. Chem. 35 (1957), 500 - 503 beschrieben.

Durch Umsetzung von IV mit 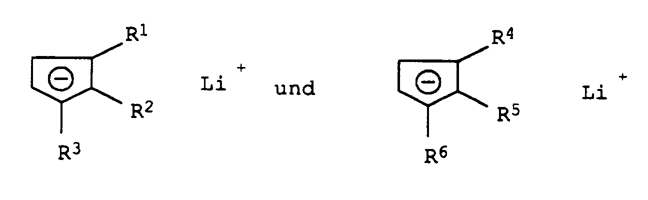 erhält man die Cyclopentadienylverbindungen III, welche man mit metallierenden Agenzien wie Alkali- oder Erdalkalialkyle oder -hydride, bevorzugt n-Butyllithium zu den Cyclopentadienylverbindungen II umsetzen kann.

Die Cyclopentadienylverbindungen II können durch Umsetzung mit metallierenden Agenzien wie Alkali- oder Erdalkalialkyle oder -hydride, bevorzugt n-Butyllithium und anschließender Versetzung mit MX₄ zu den erfindungsgemäßen Metallocenkomplexen I reagieren.

Die Reaktionsbedingungen zur Herstellung der Cyclopentadienylverbindungen III sind an sich nicht kritisch. Üblicherweise versetzt man IV mit organischen Lösungsmitteln wie Ethern und/oder Kohlenwasserstoffen, vorzugsweise einer Mischung aus Tetrahydrofuran (THF) und Pentan und kühlt die Mischung auf Temperaturen von -80 bis 0°C. Dann werden die entsprechenden Lithiumcyclopentadienylverbindungen, die vorzugsweise mit einem Lösungsmittel wie THF versetzt sind, hinzugegeben. Nach Erwärmen auf Raumtempertur gibt man zur Aufarbeitung wäßrige Lösungen eines Ammoniumsalzes hinzu, vorzugsweise eine gesättigte Ammoniumchloridlösung und trennt die Phasen.

Die Reaktionsbedingungen zur Herstellung der Cyclopentadienylverbindungen II und der Metallocenkomplexe I sind ebenfalls nicht kritisch; man arbeitet bevorzugt analog zu der zur Herstellung der Cyclopentadienylverbindungen III beschriebenen Methode.

Man erhält so die für die Polymerisation von Olefinen geeigneten Metallocenkomplexe I, die in ihren racemischen Formen Ia und Ib 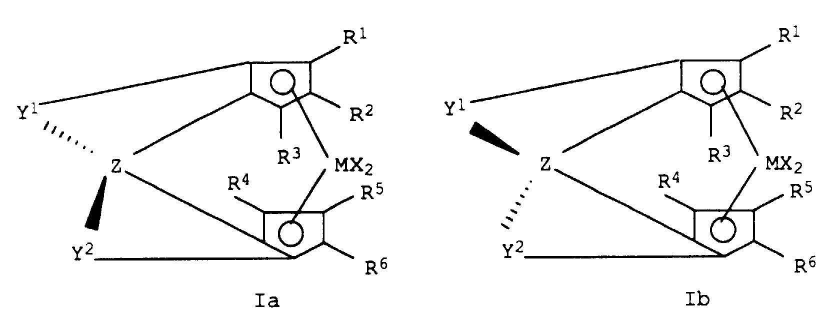 vorliegen und keine meso-Formen.

### Beispiel

Herstellung von Bis(spirosilacyclohexan-[b]-tert.butylcylcopentadienyl)zirkondichlorid I1
1) Herstellung von 3-Brompropyl-3-chlorpropyldichlorsilan IV1 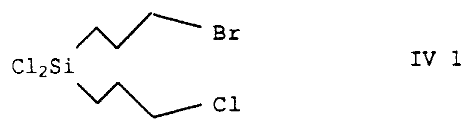 22 g (0,1 mol) Allyl-3-chlorpropyldichlorsilan wurden in einem Quarzglasgefäß vorgelegt und im Eisbad gekühlt. Unter UV-Bestrahlung wurde durch eine Siedekapillare über einen Zeitraum von 2 Stunden Bromwasserstoffgas eingeleitet. Anschließend belichtete man noch für eine weitere Stunde. Die anschließende Vakuumdestillation lieferte bei 85°C/0,6 Torr 23,5 g (78 % d.Th.) des Produktes IV 1 als klare Flüssigkeit.
¹H-NMR (CDCl₃):

| δ [ppm] | Multiplizität | Zuordnung | Anzahl |
|---|---|---|---|
| 3,58 | t | -CH₂Cl | 2 |
| 3,45 | t | -CH₂-Br | 2 |
| 2,04 | m | -CH₂-CH₂-CH₂ | 4 |
| 1,28 | m | -Si-CH₂ | 4 |

MS (EI/70EV/30°C) C₆H₁₂BrCl₃Si [298.4]: 221 [M - C₃H₆Cl]⁻; 177 [M-C₃H₆Br]⁺; 63[C₂H₄Cl]⁺; 42 [C₃H₆]⁺,
2) Herstellung von 3-Brompropyl-3-chlorpropyl-bis(tert.-butylcyclopentadienyl)silan III 1 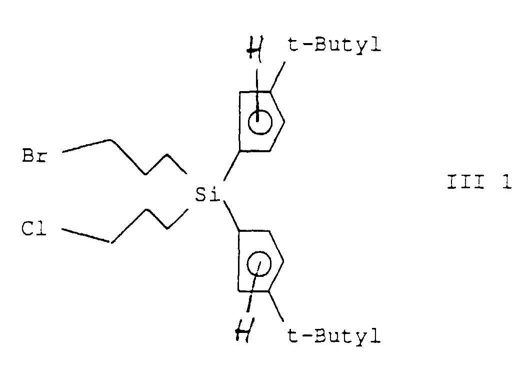 8 g (27 mmol) IV 1 wurden in 50 ml Tetrahydrofuran und 70 ml Pentan gelöst und im Eisbad gekühlt. Dazu ließ man innerhalb von 2 h 6,8 g (54 mmol) tert.-Butylcyclopentadienyllithium, gelöst in 30 ml THF, zutropfen. Nach Beendeter Zugabe erwärmte man auf Raumtemperatur und rührte für eine weitere Stunde. Anschließend wurde mit 100 ml gesättigter Ammoniumchloridlösung versetzt und die Phasen getrennt. Die organische Phase wurde mit 50 ml Wasser, die wäßrige Phase mit 50 ml Pentan gewaschen. Die vereinigten organischen Phasen wurden über Magnesiumsulfat (wasserfrei) getrocknet und filtriert. Nach Entfernen des Lösungsmittels verblieben 9,5 g (75 % d.Th.) III 1 als gelbes Öl.
¹H-NMR (CDCl₃):

| δ [ppm] | Multiplizität | Zuordnung | Anzahl |
|---|---|---|---|
| 6.67 | s | Cp (olefinisch) | 2 |
| 6.50 | s | Cp (olefinisch) | 2 |
| 6.09 | s | Cp (olefinisch) | 2 |
| 3.41 | m | -CH₂-Cl | 2 |
| 3.38 | m | -CH₂-Br | 2 |
| 3.28 | m | Cp (aliphat.) | 2 |
| 1.74 | m | -CH₂-CH₂-CH₂ | 4 |
| 1.20 | s | tert.-Butyl | 18 |
| 0.94 - 0.44 | m | -Si-CH₂- | 4 |
| Cp ≙ Cyclopentadienyl-protonen | | | |

MS (EI/70EV/110°C) C₂₄H₃₈BrClSi [469,7]: 470 [M]⁺;
455 [M - CH₃]⁺; 413 [M - tert.Butyl]⁺; 349 [M - tert.Butylcy- clopentadienyl]⁺.

| | | | |
|---|---|---|---|
| Elementaranalyse | gef.: | C 60.67; | H 7.86 |
| | ber.: | C 61.37; | H 8.15 |

3) Herstellung von Bis(cyclohexan-[b]-tert.butylcyclopentadienyl)spirosilan II 1 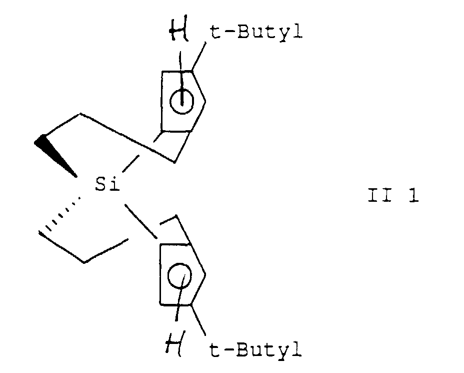 2 g (4,2 mmol) III 1 wurden in 20 ml Pentan gelöst und im Eisbad gekühlt. Mit einer Spritze wurden 5,3 ml n-Butyllithium (1,6 molar in Heptan/8,5 mmol) zugegeben. Maß ließ die Reaktionsmischung auf Raumtemperatur kommen und rührte noch für eine Stunde. Den gebildeten Niederschlag ließ man absitzen und saugte die überstehende Lösung ab. Nach Auflösen des Lithiumsalzes in Tetrahydrofuran wurde für weitere 40 h bei Raumtemperatur gerührt. Nach Zugabe von 50 ml gesättigter Ammoniumchloridlösung und 50 ml Pentan wurden die Phasen getrennt. Die organische Phase wurde mit 50 ml Wasser, die wäßrige Phase mit 50 ml Pentan gewaschen. Die vereinigten organischen Phasen wurden über Magnesiumsulfat getrocknet und anschließend am Rotationsverdampfer eingedampft. Der Rückstand wurde am Ölpumpenvakuum getrocknet. Man erhielt 1,45 g (77 % d.Th.) II 1 als gelbes Öl.

| δ [ppm] | Multiplizität | Zuordnung | Anzahl |
|---|---|---|---|
| 6.70 - 5.45 | m | Cp (olefinisch) | 4 |
| 3.50 - 2.60 | m | Cp (olefinisch) | 2 |
| 1.20 | m | tert.Butyl | 18 |
| 2.60 - 0.05 | m | aliphat. Ringprot. | 12 |

MS (EI/70EV/75°C) C₂₄H₃₈Si [352.3]: 352 [M]⁺; 337 [M - CH₃]⁺; 295 [M - tert.Butyl]⁺; 231 [M - tert.Butylcyclclopentadienyl]⁺.
4) Herstellung von Bis(spirosilacyclohexan-[b] -tert.butylcyclopentadienyl)zirkondichlorid I 1 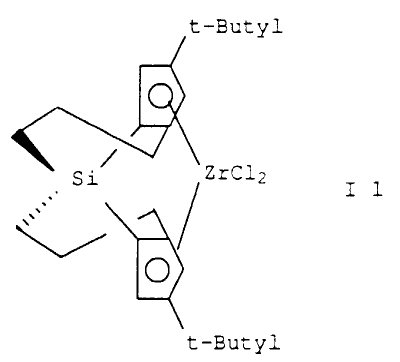 1 g (2,8 mmol) II 1 wurden in 40 ml Pentan gelöst und mit 3,5 ml n-Butyllithiumlösung (1,6 m in Hexan/5,6 mmol) versetzt. Nach 1 h ließ man das ausgefallene Lithiumsalz absetzen und saugte die überstehende Lösung ab. Nach Trocknen am Ölpumpenvakuum erhielt man 1 g Lithiumsalz (2,7 mmol), das mit 0,7 g (3 mmol) ZrCl₄ verrührt wurde. Zu dieser Feststoffmischung gab man 30 ml Toluol und rührte die Suspension 20 h bei Raumtemperatur. Das Reaktionsgemisch wurde anschließend am Vakuum vollständig eingedampft und der Rückstand in 50 ml Pentan aufgenommen. Bei -80°C kristallisierten 20 mg (1,4 % d.Th.) der Verbindung I 1.
¹H-NMR (CDCl₃):

| δ [ppm] | Multiplizität | Zuordnung | Anzahl |
|---|---|---|---|
| 6.71 und 5.47 | d | Cp | 4 |
| 1.49 | s | tert. Butyl | 18 |
| 1.46-0.82 | m | aliphat. Ringprot. | 12 |

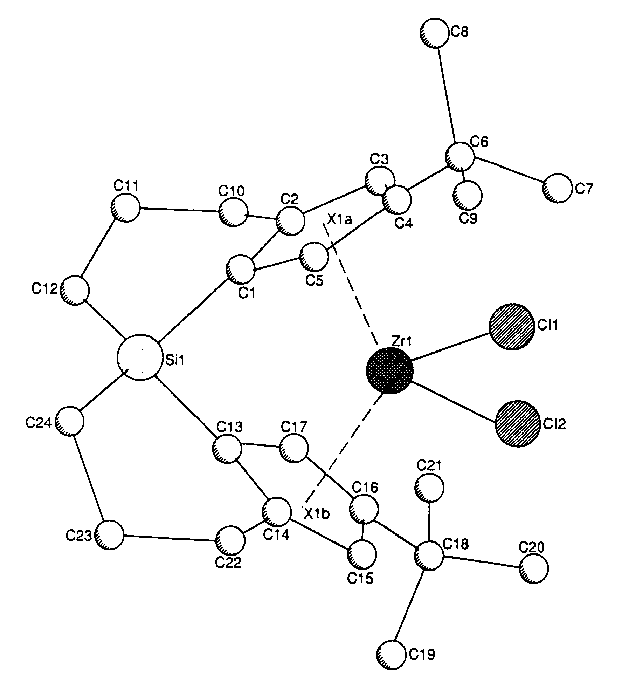

MS (El/70EV/220°C) C₂₄H₃₄Cl₂SiZr [512.3]: 512 [M]⁺; 497 [M-CH₃]⁺; 461 [M-CH₃-HCl]⁺. (vgl. Fig. 1: Kristallstruktur von I1)

## Patentansprüche

1. Metallocenkomplexe der allgemeinen Formel I 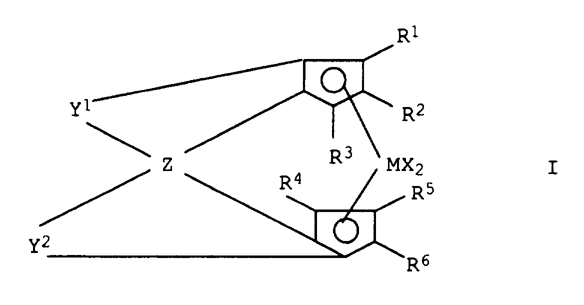 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁷,
wobei
R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁶ Wasserstoff, C₁ bis C₁₀-Alkyl, 5- bis 7-gliedriges Cycloalkyl, das seinerseits C₁- bis C₁₀-Alkyle als Substituenten tragen kann, C₆-bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁸)₃ mit
R⁸ C₁- bis C₁₀-Alkyl, C₆- bis C15-Aryl oder C₃-bis C₁₀-Cycloalkyl,
Z Silicium, Germanium, Zinn oder Kohlenstoff,
Y¹, Y² 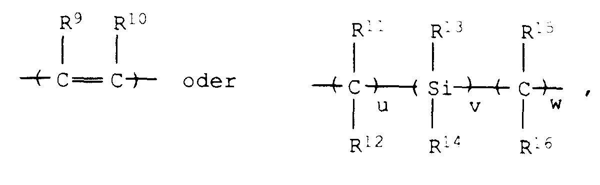
wobei
R⁹ bis R¹⁶ Wasserstoff, C₁ bis C₁₀-Alkyl, 5- bis 7-gliedriges Cycloalkyl, das seinerseits C₁- bis C₁₀-Alkyle als Substituenten tragen kann, C₆-bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁷)₃ bedeuten, mit
R¹⁷ C₁- bis C₁₀-Alkyl, C₆- bis C₁₅-Aryl oder C₃- bis C₁₀-Cycloalkyl
und
u, v, w für ganze Zahlen von 0 bis 7 stehen, mit der Maßgabe, daß die Summe u + v + w ≥ 2 ist.

2. Cyclopentadienylverbindungen der allgemeinen Formel II 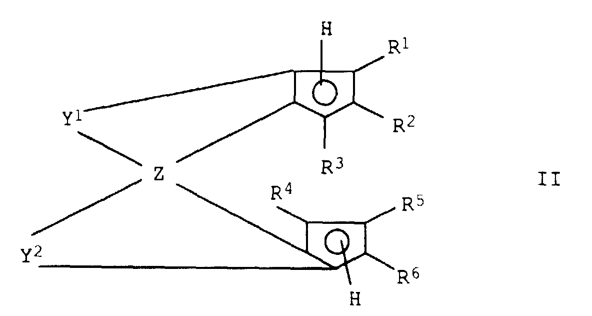 in der die Substituenten folgende Bedeutung haben:
R¹ bis R⁶ Wasserstoff, C₁ bis C₁₀-Alkyl, 5- bis 7-gliedriges Cycloalkyl, das seinerseits C₁- bis C₁₀-Alkyle als Substituenten tragen kann, C₆-bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁸)₃ mit
R⁸ C₁- bis C₁₀-Alkyl, C₆- bis C₁₅-Aryl oder C₃- bis C₁₀-Cycloalkyl,
Z Silicium, Germanium, Zinn oder Kohlenstoff,
Y¹, Y² 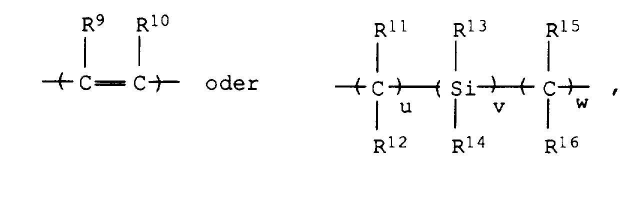
wobei
R⁹ bis R¹⁶ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁷)₃ bedeuten, mit
R¹⁷ C₁- bis C₁₀-Alkyl, C₆- bis C₁₅-Aryl oder C₃- bis C₁₀-Cycloalkyl
und
u, v, w für ganze Zahlen von 0 bis 7 stehen, mit der Maßgabe, daß die Summe u + v + w ≥ 2 ist.

3. Cyclopentadienylverbindungen der allgemeinen Formel III 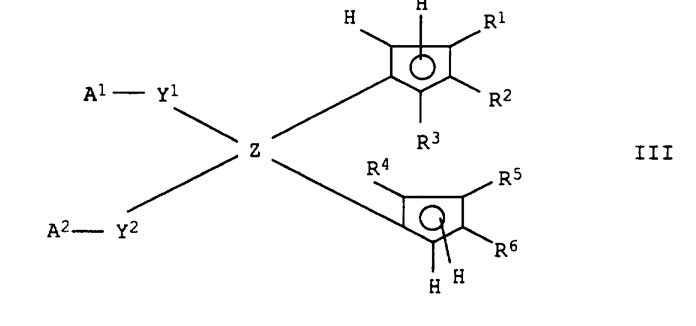 in der die Substituenten folgende Bedeutung haben:
R¹ bis R⁶ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁸)₃ mit
R⁸ C₁- bis C₁₀-Alkyl, C₆- bis C₁₅-Aryl oder C₃- bis C₁₀-Cycloalkyl,
Z Silicium, Germanium, Zinn oder Kohlenstoff,
Y¹, Y² 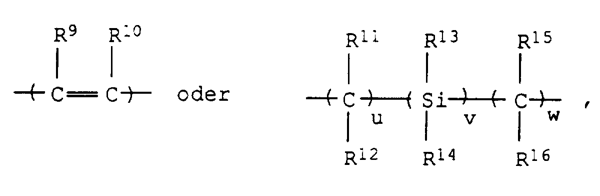
wobei
R⁹ bis R¹⁶ Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atcme aufweisende cyclische Gruppen stehen können, oder Si(R¹⁷)₃ bedeuten, mit
R¹⁷ C₁- bis C₁₀-Alkyl, C₆- bis C₁₅-Aryl oder C₃- bis C₁₀-Cycloalkyl,
u, v, w für ganze Zahlen von 0 bis 7 stehen, mit der Maßgabe, daß die Summe u + v + w ≥ 2 ist
und
A¹, A² Fluor, Chlor, Brom, Jod oder -OSO₃R¹⁸
wobei
R¹⁸ C₁- bis C₁₀-Alkyl, C₆- bis C₁₅-Aryl oder C₃- bis C₁₀-Cycloalkyl bedeutet.

4. Verfahren zur Herstellung von Cyclopentadienylverbindungen III gemäß Anspruch 3, dadurch gekennzeichnet, daß man 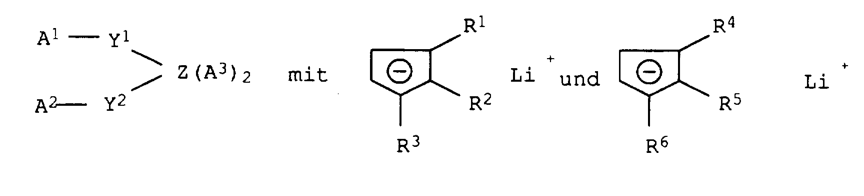 umsetzt,
wobei A³ Fluor, Chlor, Brom oder Jod bedeutet.

5. Verfahren zur Herstellung von Cyclopentadienylverbindungen II gemäß Anspruch 2, dadurch gekennzeichnet, daß man Cyclopentadienylverbindungen der allgemeinen Formel III mit metallierenden Agenzien umsetzt.

6. Verfahren zur Herstellung von Metallocenkomplexen I gemäß Anspruch 1, dadurch gekennzeichnet, daß man Cyclopentadienylverbindungen der allgemeinen Formel II mit metallierenden Agenzien umsetzt und anschließend mit MX₄ versetzt.

7. Verwendung von Cyclopentadienylverbindungen III gemäß Anspruch 3 zur Herstellung von Cyclopentadienylverbindungen II.

8. Verwendung von Cyclopentadienylverbindungen II gemäß Anspruch 2 zur Herstellung von Metallocenkomplexen I.

9. Verwendung von Metallocenkomplexen I gemäß Anspruch 1 als Katalysatoren zur Polymerisation von Olefinen.

## Claims

1. A metallocene complex of the formula I 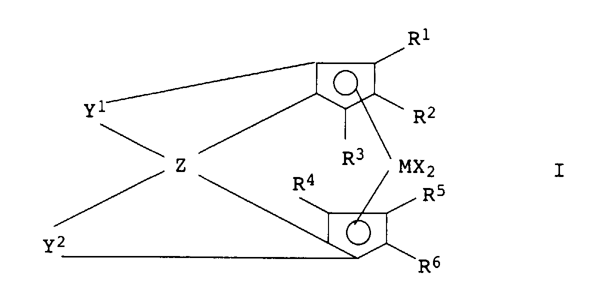 where
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR⁷,
R⁷ is C₁-C₁₀-alkyl, C₆-C₁₅-aryl, alkylaryl, arylalkyl, fluoroalkyl or fluoroaryl where each alkyl radical is of 1 to 10 carbon atoms and each aryl radical is from 6 to 20 carbon atoms,
R¹ to R⁶ are each hydrogen, C₁-C₁₀-alkyl, 5-membered to 7-membered cycloalkyl which in turn may carry C₁-C₁₀-alkyl radicals as substituents, C₆-C₁₅-aryl or arylalkyl, where two adjacent radicals together may furthermore be a cyclic group of 4 to 15, preferably 8 to 15, carbon atoms, or Si(R⁸)₃
R⁸ is C₁-C₁₀-alkyl, C₆-C₁₅-aryl or C₃-C₁₀-cycloalkyl,
Z is silicon, germanium, tin or carbon,
Y¹ and Y² are each 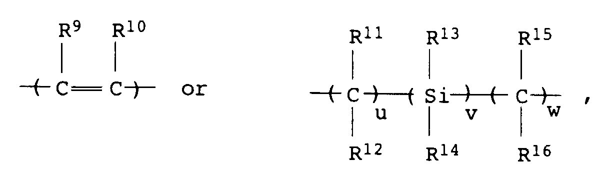
R⁹ to R¹⁶ are each hydrogen, C₁-C₁₀-alkyl, 5-membered to 7-membered cycloalkyl which in turn may carry C₁-C₁₀-alkyl radicals as substituents, C₆-C₁₅-aryl or arylalkyl, where two adjacent radicals together may furthermore be a cyclic group of 4 to 15 carbon atoms, or Si(R¹⁷)₃
R¹⁷ is C₁-C₁₀-alkyl, C₆-C₁₅-aryl or C₃-C₁₀-cycloalkyl
and
u, v and w are each an integer from 0 to 7, with the proviso that the sum u + v + w is ≥ 2.

2. A cyclopentadienyl compound of the formula II 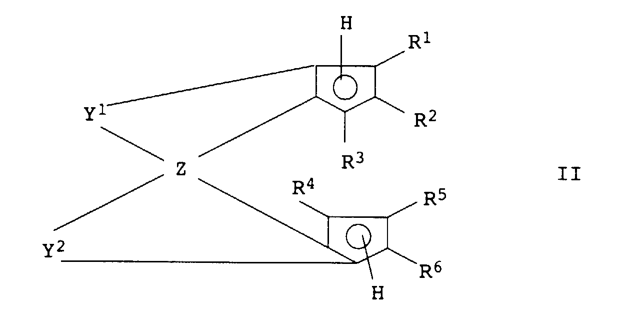
R¹ to R⁶ are each hydrogen, C₁-C₁₀-alkyl, 5-membered to 7-membered cycloalkyl which in turn may carry C₁-C₁₀-alkyl radicals as substituents, C₆-C₁₅-aryl or arylalkyl, where two adjacent radicals together may furthermore be a cyclic group of 4 to 15 carbon atoms, or Si(R⁸)₃
R⁸ is C₁-C₁₀-alkyl, C₆-C₁₅-aryl or C₃-C₁₀-cycloalkyl,
Z is silicon, germanium, tin or carbon,
Y¹ and Y² are each 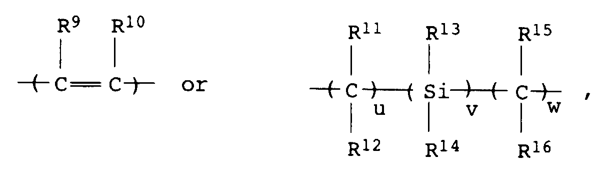
R⁹ to R¹⁶ are each hydrogen, C₁-C₁₀-alkyl, 5-membered to 7-membered cycloalkyl which in turn may carry C₁-C₁₀-alkyl radicals as substituents, C₆-C₁₅-aryl or arylalkyl, where two adjacent radicals together may furthermore be a cyclic group of 4 to 15 carbon atoms, or Si(R¹⁷)₃
R¹⁷ is C₁-C₁₀-alkyl, C₆-C₁₅-aryl or C₃-C₁₀-cycloalkyl
and
u, v and w are each an integer from 0 to 7, with the proviso that the sum u + v + w is ≥ 2.

3. A cyclopentadienyl compound of the formula III 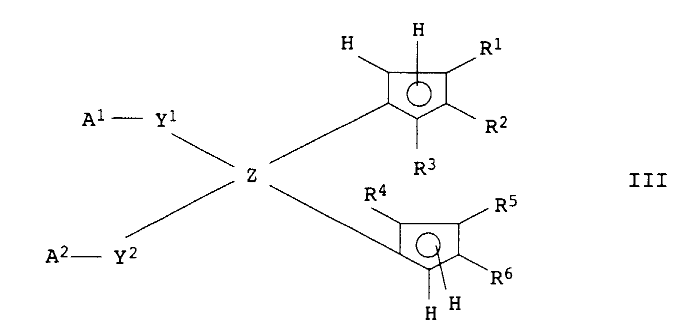
R¹ to R⁶ are each hydrogen, C₁-C₁₀-alkyl, 5-membered to 7-membered cycloalkyl which in turn may carry C₁-C₁₀-alkyl radicals as substituents, C₆-C₁₅-aryl or arylalkyl, where two adjacent radicals together may furthermore be a cyclic group of 4 to 15 carbon atoms, or Si(R⁸)₃
R⁸ is C₁-C₁₀-alkyl, C₆-C₁₅-aryl or C₃-C₁₀-cycloalkyl,
Z is silicon, germanium, tin or carbon,
Y¹ and Y² are each 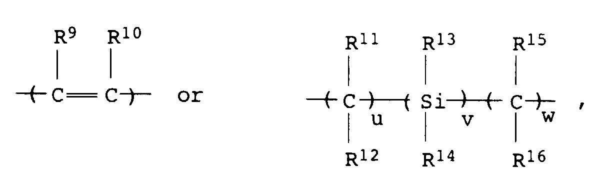
R⁹ to R¹⁶ are each hydrogen, C₁-C₁₀-alkyl, 5-membered to 7-membered cycloalkyl which in turn may carry C₁-C₁₀-alkyl radicals as substituents, C₆-C₁₅-aryl or arylalkyl, where two adjacent radicals together may furthermore be a cyclic group of 4 to 15 carbon atoms, or Si(R¹⁷)₃
R¹⁷ is C₁-C₁₀-alkyl, C₆-C₁₅-aryl or C₃-C₁₀-cycloalkyl,
u, v and w are each an integer from 0 to 7, with the proviso that the sum u + v + w is ≥ 2,
A¹ and A² are each fluorine, chlorine, bromine, iodine or -OSO₃R¹⁸
and
R¹⁸ is C₁-C₁₀-alkyl, C₆-C₁₅-aryl or C₃-C₁₀-cycloalkyl.

4. A process for the preparation of a cyclopentadienyl compound III as claimed in claim 3, wherein 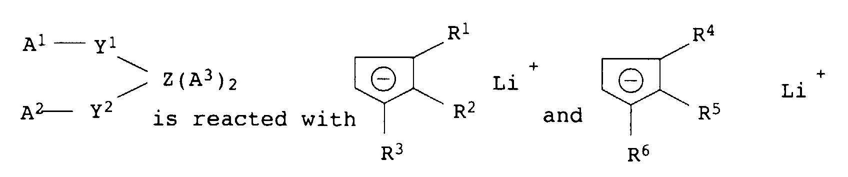 where A³ is fluorine, chlorine, bromine or iodine.

5. A process for the preparation of a cyclopentadienyl compound II as claimed in claim 2, wherein a cyclopentadienyl compound of the formula III is reacted with a metalating agent.

6. A process for the preparation of a metallocene complex I as claimed in claim 1, wherein a cyclopentadienyl compound of the general formula II is reacted with a metalating agent and MX₄ is then added.

7. The use of a cyclopentadienyl compound III as claimed in claim 3 for the preparation of a cyclopentadienyl compound II.

8. The use of a cyclopentadienyl compound II as claimed in claim 2 for the preparation of a metallocene complex I.

9. The use of a metallocene complex I as claimed in claim 1 as a catalyst for the polymerization of olefins.

## Revendications

1. Complexes métallocènes de formule générale I 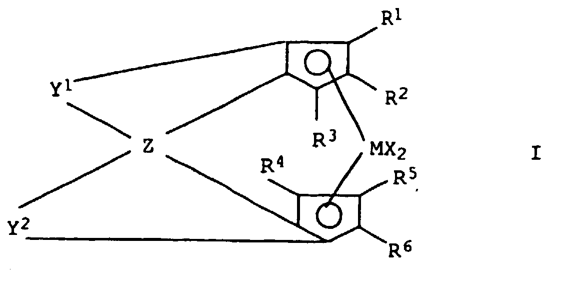 dans laquelle les substituants ont les significations suivantes :
M est le titane, le zirconium, le hafnium, le vanadium, le niobium ou le tantale,
X est le fluor, le chlore, le brome, l'iode, un atome d'hydrogène, un groupe alkyle en C₁ à C₁₀, aryle en C₆ à C₁₅ ou OR⁷,
où R⁷ est un groupe alkyle en C₁ à C₁₀, aryle en C₆ à C₁₅, alkylaryle, arylalkyle, fluoralkyle ou fluoraryle ayant chacun de 1 à 10 atomes de carbone dans le fragment alkyle et de 6 à 20 atomes de carbone dans le fragment aryle,
R¹ à R⁶ représentent chacun un atome d'hydrogène, un groupe alkyle en C₁ à C₁₀, cycloalkyle ayant de 5 à 7 chaînons, qui peut pour sa part porter en tant que substituants des groupes alkyle en C₁ à C₁₀, aryle en C₆ à C₁₅ ou arylalkyle, auquel cas deux radicaux voisins peuvent éventuellement aussi former ensemble des groupes cycliques ayant de 4 à 15 atomes de carbone ; ou Si(R⁸)₃, où
R⁸ est un groupe alkyle en C₁ à C₁₀, aryle en C₆ à C₁₅ ou cycloalkyle en C₃ à C₁₀,
Z est le silicium, le germanium, l'étain ou le carbone,
Y¹, Y² sont 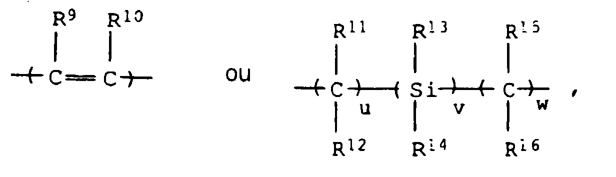
où R⁹ à R¹⁶ représentent chacun un atome d'hydrogène, un groupe alkyle en C₁ à C₁₀, cycloalkyle ayant de 5 à 7 chaînons, qui peut pour sa part porter en tant que substituants des groupes alkyle en C₁ à C₁₀ ; aryle en C₆ à C₁₅ ou arylalkyle, auquel cas deux radicaux voisins peuvent éventuellement aussi former ensemble des groupes cycliques ayant de 4 à 15 atomes de carbone ; ou Si(R¹⁷)₃, où
R¹⁷ est un groupe alkyle en C₁ à C₁₀, aryle en C₆ à C₁₅ ou cycloalkyle en C₃ à C₁₀,
et
u, v, w sont des nombres entiers de 0 à 7, à la condition que la somme u + v + w ≥ 2.

2. Composés cyclopentadiényliques de formule générale II 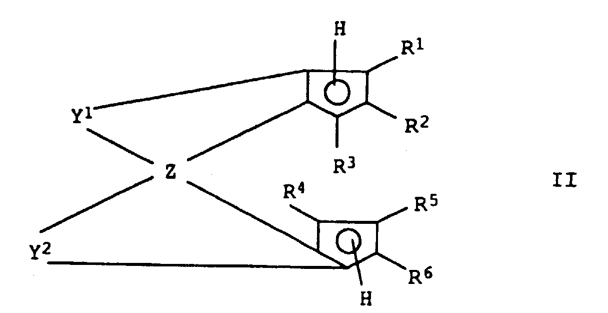 dans laquelle les substituants ont les significations suivantes :
R¹ à R⁶ représentent chacun un atome d'hydrogène, un groupe alkyle en C₁ à C₁₀, cycloalkyle ayant de 5 à 7 chaînons, qui peut pour sa part porter en tant que substituants des groupes alkyle en C₁ à C₁₀ ; aryle en C₆ à C₁₅ ou arylalkyle, auquel cas deux radicaux voisins peuvent éventuellement aussi former ensemble des groupes cycliques ayant de 4 à 15 atomes de carbone ; ou Si(R⁸)₃, où
R⁸ est un groupe alkyle en C₁ à C₁₀, aryle en C₆ à C₁₅ ou cycloalkyle en C₃ à C₁₀,
Z est le silicium, le germanium, l'étain ou le carbone,
Y¹, Y² sont 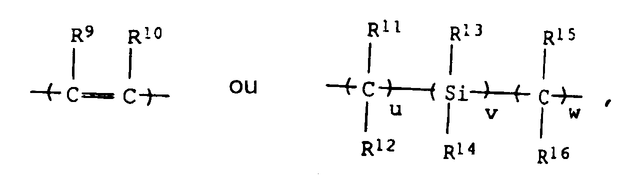
où R⁹ à R¹⁶ représentent chacun un atome d'hydrogène, un groupe alkyle en C₁ à C₁₀, cycloalkyle ayant de 5 à 7 chaînons, qui peut pour sa part porter en tant que substituants des groupes alkyle en C₁ à C₁₀ ; aryle en C₆ à C₁₅ ou arylalkyle, auquel cas deux radicaux voisins peuvent éventuellement aussi former ensemble des groupes cycliques ayant de 4 à 15 atomes de carbone ; ou Si(R¹⁷)₃, où
R¹⁷ est un groupe alkyle en C₁ à C₁₀, aryle en C₆ à C₁₅ ou cycloalkyle en C₃ à C₁₀,
et
u, v, w sont des nombres entiers de 0 à 7, à la condition que la somme u + v + w ≥ 2.

3. Composés cyclopentadiényliques de formule générale III 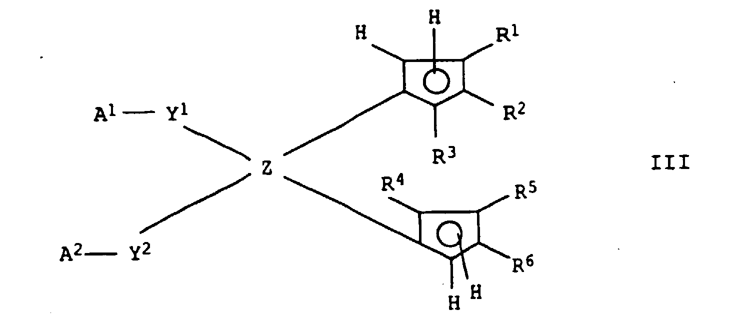 dans laquelle les substituants ont les significations suivantes :
R¹ à R⁶ représentent chacun un atome d'hydrogène, un groupe alkyle en C₁ à C₁₀, cycloalkyle ayant de 5 à 7 chaînons, qui peut pour sa part porter en tant que substituants des groupes alkyle en C₁ à C₁₀ ; aryle en C₆ à C₁₅ ou arylalkyle, auquel cas deux radicaux voisins peuvent éventuellement aussi former ensemble des groupes cycliques ayant de 4 à 15 atomes de carbone ; ou Si(R⁸)₃, où
R⁸ est un groupe alkyle en C₁ à C₁₀, aryle en C₆ à C₁₅ ou cycloalkyle en C₃ à C₁₀,
Z est le silicium, le germanium, l'étain ou le carbone,
Y¹, Y² sont 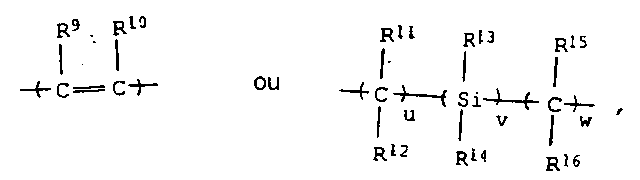
où R⁹ à R¹⁶ représentent chacun un atome d'hydrogène, un groupe alkyle en C₁ à C₁₀, cycloalkyle ayant de 5 à 7 chaînons, qui peut pour sa part porter en tant que substituants des groupes alkyle en C₁ à C₁₀ ; aryle en C₆ à C₁₅ ou arylalkyle, auquel cas deux radicaux voisins peuvent éventuellement aussi former ensemble des groupes cycliques ayant de 4 à 15 atomes de carbone ; ou Si(R¹⁷)₃, où
R¹⁷ est un groupe alkyle en C₁ à C₁₀, aryle en C₆ à C₁₅ ou cycloalkyle en C₃ à C₁₀,
et
u, v, w sont des nombres entiers de 0 à 7, à la condition que la somme u + v + w ≥ 2,
et
A¹, A² sont des atomes de fluor, de chlore, de brome, d'iode, ou -OSO₃R¹⁸,
où R¹⁸ est un groupe alkyle en C₁ à C₁₀, aryle en C₆ à C₁₅ ou cycloalkyle en C₃ à C₁₀.

4. Procédé de préparation de composés cyclopentadiényliques III selon la revendication 3, caractérisé en ce qu'on fait réagir 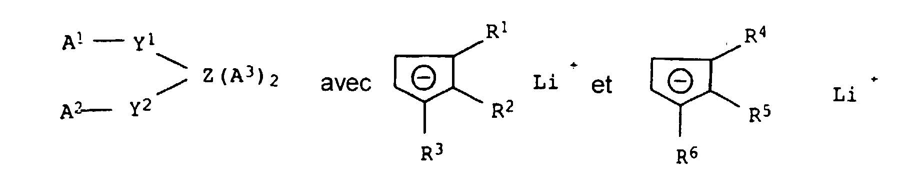 où A³ est un atome de fluor, de chlore, de brome ou d'iode.

5. Procédé de préparation de composés cyclopentadiényliques II selon la revendication 2, caractérisé en ce qu'on fait réagir des composés cyclopentadiényliques de formule générale III avec des agents de métallation.

6. Procédé de préparation de complexes métallocènes I selon la revendication 1, caractérisé en ce qu'on fait réagir des composés cyclopentadiényliques de formule générale II avec des agents de métallation, puis on ajoute du MX₄.

7. Utilisation de composés cyclopentadiényliques III selon la revendication 3 pour préparer des composés cyclopentadiényliques II.

8. Utilisation de composés cyclopentadiényliques II selon la revendication 2 pour préparer des complexes métallocènes I.

9. Utilisation de complexes métallocènes I selon la revendication 1 en tant que catalyseurs pour la polymérisation d'oléfines.
